# EUROPÄISCHE PATENTSCHRIFT

(11) **EP 1 728 005 B1**
(45) Veröffentlichungstag und Bekanntmachung des Hinweises auf die Patenterteilung: **04.05.2011**
(21) Anmeldenummer: 05707917.0
(22) Anmeldetag: 02.02.2005
(51) Int. Cl.: F16H 1/32

(54) **EXZENTERGETRIEBE**
ECCENTRIC GEARING
TRANSMISSION A EXCENTRIQUE

(30) Priorität: 19.03.2004 DE 102004013543
(43) Veröffentlichungstag der Anmeldung: 06.12.2006
(73) Patentinhaber: ROBERT BOSCH GMBH, 70442 Stuttgart (DE)
(72) Erfinder: GENTER, Gerhard, 77855 Achern (DE); SCHMIDT, Willi, 76297 Stutensee-Buechig (DE); MEYER, Martin, 76228 Karlsruhe-Gruenwetterbach (DE)
(86) Internationale Anmeldenummer: PCT/EP2005/050446
(87) Internationale Veröffentlichungsnummer: WO 2005/090826

(56) Entgegenhaltungen:
- EP-A- 0 450 324
- DE-A1- 3 214 592
- DE-A1- 19 709 852
- DE-U1- 29 521 247
- US-A- 4 512 213
- US-B1- 6 280 359
- PATENT ABSTRACTS OF JAPAN Bd. 016, Nr. 320 (C-0962), 14. Juli 1992 (1992-07-14) & JP 04 092606 A (JOHNAN SEISAKUSHO CO LTD), 25. März 1992 (1992-03-25)

## Beschreibung

### Stand der Technik

Die Erfindung betrifft ein Exzentergetriebe zum Verstellen zweier relativ zueinander beweglich angeordneter Teile nach der Gattung des unabhängigen Anspruchs 1. Die DE 3212592 A1 wird als nächst liegender Stand der Technik angesehen. Mit der EP 0 981 696 B1 ist ein Elektromotor mit einem Exzenterzahnrad-Getriebe bekannt geworden, bei dem ein auf einem Exzenter gelagertes Exzenterzahnrad auf einem in das Motorgehäuse integrierten Bolzen angeordnet ist. Als Antrieb für den Exzenter wird wahlweise ein elektrisch kommutierter, oder ein Elektromotor mit Bürsten verwendet, der unmittelbar in das Gehäuse des Exzenterzahntadgetriebes integriert ist. Hierbei ist ein mit dem Exzenter verbundener Mitnehmer einstückig mit dem Anker des Elektromotors ausgebildet, der ebenfalls drehbar auf dem Bolzen-gelagert ist. Das Exzenterrad weist Führungselemente auf, die entweder im feststehenden Gehäusedeckel in einer als Führung dienenden Öffnung unmittelbar geführt sind, oder in Öffnungen-geführt sind, welche in einem im Gehäusedeckel aufgenommenen und darin verschiebbar-geführten Schieber angeordnet sind.

Eine solche Vorrichtung hat den Nachteil, dass beim Auftreten großer Drehmomente, die beispielsweise bei großen Verstellkräften oder bei einer Crash-Situation auf das Abtriebselement einwirken, das Exzentergetriebe und das Getriebegehäuse schnell beschädigt werden können. Eine solche Getriebevorrichtung eignet sich daher nicht für Verstellanwendungen im Kraftfahrzeug - wie beispielsweise einer Sitzverstellung -, bei denen hohe Sicherheitsanforderungen gestellt werden.

### Vorteile der Erfindung

Das erfindungsgemäße Exzentergetriebe mit den kennzeichnenden Merkmalen des unabhängigen Anspruchs 1 hat den Vorteil, dass durch die Anordnung eines stabilen Befestigungsflansches um ein Kopplungselement, das mit dem Exzenterrad zusammenwirkt, auch große, auf das Abtriebselement einwirkende Drehmomente über den Befestigungsflansch an karosseriefeste Teile abgeführt werden können. Durch den Kraftschluss vom Abtriebselement über das Exzenterrad direkt auf das Kopplungselement und von diesem direkt auf den Befestigungsflansch bleibt der Drehantrieb mit seiner Kraftübertragungsstrecke zum Mitnehmer des Exzenters vor einer erhöhten Krafteinwirkung geschützt. Ebenso ist das Getriebegehäuse keinem erhöhten Kraftfluss ausgesetzt, so dass dieses vorteilhaft aus Kunststoff hergestellt werden kann. Da der Befestigungsflansch Aufnahmen aufweist, die beispielsweise als Durchbrüche im Flansch ausgebildet sind, können an diesem sowohl die Getriebegehäuseteile befestigt werden, als auch das gesamte Exzentergetriebe an einem der gegeneinander beweglichen Teile befestigt werden. Da das Getriebegehäuse aus Kunststoff gefertigt ist, können darin weitere Getriebeelemente direkt mit geringer Reibung gelagert werden. Durch die Ausbildung eines axial montierbaren Getriebegehäusedeckels können die beiden Gehäuseteile vorteilhaft an dem stabil ausgeführten Befestigungsflansch fixiert werden.

Durch die in den Unteransprüchen aufgeführten Maßnahmen ergeben sich vorteilhafte Weiterbildungen und Verbesserungen der im Anspruch 1 angegebenen Merkmale.

Ist der Befestigungsflansch aus Metall, beispielsweise Stahl, hergestellt, kann dieser besonders hohe Kräfte übertragen, ohne dass das Getriebe zerstört wird. Außerdem können günstig radiale Laschen angeformt werden, an denen Aufnahmen zur Befestigung an einem der gegeneinander beweglichen Teile angeformt sind.

Um beim Zusammenbau des Getriebes den Grundkörper und Deckel des Getriebegehäuses zueinander und zu den übrigen Getriebebauteilen radial zu zentrieren, weist der Befestigungsflansch mindestens einen Bund mit einer radialen Stützffäche auf, an dem sich die Gehäuseteile radial abstützen.

Um das Exzenterrad auf eine Exzenterbewegung um die gehäusefeste Mittelachse zu zwingen, sind am Kopplungselement Führungselemente angeordnet, die mit dem Exzenterrad und dem Befestigungsflansch derart zusammenwirken, dass das Kopplungselement ohne Eigendrehung jeweils entlang einer Geraden-geführt wird.

Hierzu weist der Befestigungsflansch radial ausgerichtete Fortsätze auf, die mit radial ausgerichteten Gegenelementen - beispielsweise offene Langlöcher - des Kopplungselements zusammenwirken.

Des weiteren weist das Kopplungselement weitere radial ausgerichtete Führungselemente auf, die in etwa senkrecht zur ersten Führungsschiene ausgerichtet sind und mit entsprechenden Gegenelementen des Exzenterrads zusammenwirken.

Zum Übertragen hoher auf das Exzentergetriebe einwirkenden Drehmomente weist der Befestigungsflansch Stützflächen auf, an denen korrespondierende Stützflächen des Kopplungselements anliegen, um das Drehmoment in beide Drehrichtungen übertragen zu können. Hierbei können besonders günstig die Fübrungsflächen der Führungselemente gleichzeitig als Stützflächen dienen.

Für einen kompakten Aufbau des Exzentergetriebes, insbesondere zur Erzielung eines geringen Außendurchmessers, weist das Exzenterrad eine Außenverzahnung auf, die mit einer korrespondierenden Innenverzahnung mit einer unterschiedlichen Zähneanzahl des Abtriebselements kämmt.

Zur Erzielung eines geringen Außenduchmessers des Getriebes ist in Verlängerung des Abtriebselements ein Bolzen als Mittelachse ausgebildet, auf dem die einzelnen Getriebeelemente angeordnet sind. Zur Realisierung einer weiteren Untersetzungsstufe kann der Mitnehmer über ein Schneckenrad von einer Schneckenwelle eines Elektromotors angetrieben werden.

Um die auf das Abtriebselement einwirkenden Kräfte abzunehmen, ist das Abtriebselement radial und/oder axial im Deckel des Getriebegehäuses gelagert, wozu dieser vorzugsweise aus Metall ausgebildet ist. Ein Teil des Abtriebselements ragt hierbei aus einer Öffnung des Deckels und bildet eine beliebig ausgeformte Schnittstelle zur Verstellmechanik des zu verstellenden Teils bzw. des gehäusefesten Teils.

### Zeichnungen

In den Zeichnungen sind verschiedene Ausführungsbeispiele einer erfindungsgemäßen Vorrichtung dargestellt und in der nachfolgenden Beschreibung näher erläutert.

Es zeigen
- Figur 1: einen Schnitt durch ein erfindungsgemäßes Exzentergetriebe nach A - A und
- Figur 2: einen radialen Schnitt des Exzentergetriebes nach II-II.

### Beschreibung der Ausführungsbeispiele

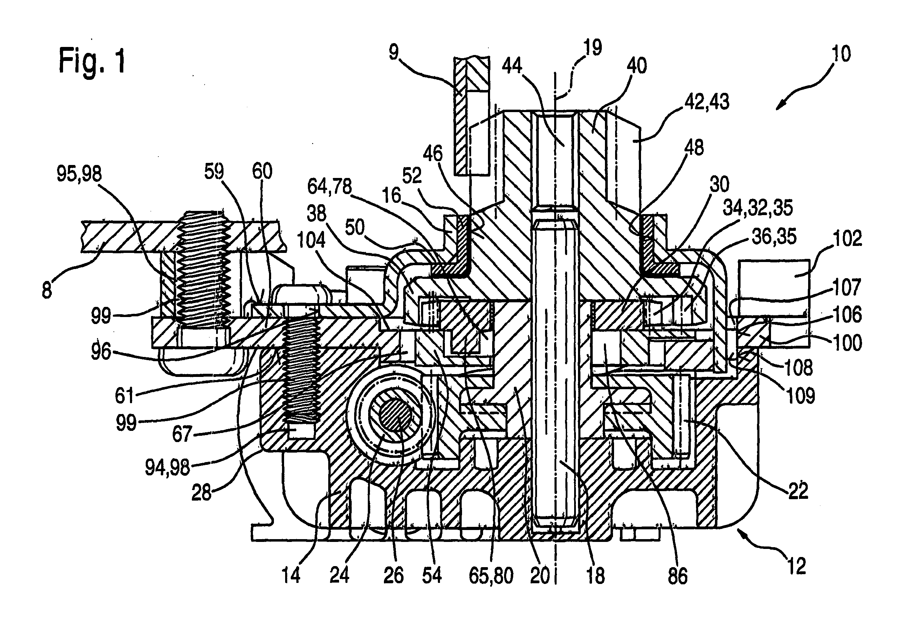

In Figur 1 ist ein Exzentergetriebe 10 mit einem Getriebegehäuse 12 dargestellt, das einen Grundkörper 14 aus Kunststoff und einen Deckel 16 aufweist, der beispielsweise aus Metall gefertigt ist. Im Getriebegehäuse 12 ist ein Bolzen 18 angeordnet, auf dem drehbar ein Exzenterelement 20 gelagert ist. Das Exzenterelement 20 ist drehfest mit einem Schneckenrad 22 verbunden, das mit einer Schnecke 24 kämmt. Die Schnecke 24 ist beispielsweise auf einer Ankerwelle 26 eines nicht näher dargestellten Elektromotors 28 angeordnet, der das Exzenterelement 20 zu einer Drehbewegung um den Lagerbolzen 18 veranlasst. In einem weiteren, nicht näher dargestellten Ausführungsbeispiel wird das Exzenterelement 20 direkt von einem Anker des Elektromotors 28 angetrieben, wie dies beispielsweise in der EP 0 981696 B1 dargestellt ist.

Auf dem Exzenterelement 20 ist ein gegenüber diesem frei drehbar gelagertes Exzenterrad 30 mit einer als Außenverzahnung 32 ausgebildeten Stirnradverzahnung 34 gelagert. Die Außenverzahnung 32 kämmt mit einer Innenverzahnung 36 eines Hohlrads 38, das als Abtriebselement 40 ausgebildet ist. Zur Übertragung des Abtriebsmoments auf eine nicht näher dargestellte Kinematik eines Sitzgestells weist das Abtriebselement 40 beispielsweise eine Kerbverzahnung 42, eine Stirnverzahnung 43, oder einen Innenvielkant 44 auf, in das formschlüssig ein Kraftübertragungselement 9 des Sitzgestänges greift. Das Exzenterelement 20 und das Abtriebselement 40 mit dem Hohlrad 38 sind axial übereinander auf dem Lagerbolzen 18 angeordnet. Dabei ist beispielsweise das Abtriebselement 40 drehfest und das Exzenterelement 20 drehbar auf dem Lagerbolzen 18 gelagert, der wiederum drehbar im Getriebegehäuse 12 gelagert ist Das Abtriebselement 40 wird an einer radialen Außenfläche 46 an einer kreisförmigen Öffnung 48 des Deckels 16 radial abgestützt. Des weiteren weist der Deckel 16 eine axiale Schulter 50 auf, an dem sich das Abtriebselement 40 und über dieses auch das Mitnehmerelement 20 und das Exzenterrad 30 axial abstützt. Ist der Deckel 16 beispielsweise aus Stahl gefertigt, ist zwischen dem Abtriebselement 40 und dem Deckel 16 eine Lagerbüchse 52 angeordnet, beispielsweise aus Kunststoff, um das Exzentergetriebe mit reduzierter Reibung zu lagern. Die Innenverzahnung 36 des Hohkads 38 weist eine von der Außenverzahnung 32 des Exzenterrads 30 abweichende Anzahl von Zähnen 35 auf, wodurch ein unterschiedliches Untersetzungsverhältnis realisiert werden kann. Das Exzenterrad 30 wird dabei vom Exzenterelement 20 geführt und mittels eines Kopplungselements 54 an einer Eigenrotation gehindert. Dazu weist das Kopplungselement 54 erste Führungselemente 56 auf, die in korrespondierende Gegenelemente 57 eines Befestigungsflansches 60 greifen, der zwischen dem Grundkörper 14 und dem Deckel 16 angeordnet ist. Dadurch ist das Kupplungselement 54 gegenüber dem Befestigungsflansch 60 ausschließlich auf einer Geraden 62 bewegbar. Zur Kopplung des Befestigungsflansches 60 mit dem Exzenterrad 30 weist das Kopplungselement 54 zweite Führungselemente 64 auf, die mit entsprechenden Gegenelementen 65 des Exzenterrads 30 zusammenwirken. Die Führungs- bzw. Gegenelemente 54, 30 sind derart ausgebildet, dass sich das Exzenterrad 30 gegenüber dem Kopplungselement 54 ebenfalls ausschließlich auf einer zweiten Geraden 66 bewegen kann, die näherungsweise senkrecht zur Geraden 62 angeordnet ist. Da sich nun das Exzenterrad 30 gegenüber dem Befestigungsflansch 60 ausschließlich auf zwei in etwa senkrecht zueinander angeordneten Geraden 62, 66 bewegen kann, wird eine Eigenrotation des Exzenterrades 30 mittels des Kopplungselements 54 unterbunden, wodurch sich das Abtriebselement 40 entsprechend dem Untersetzungsverhältnis auf dem Exzenterrad 30 abrollt.

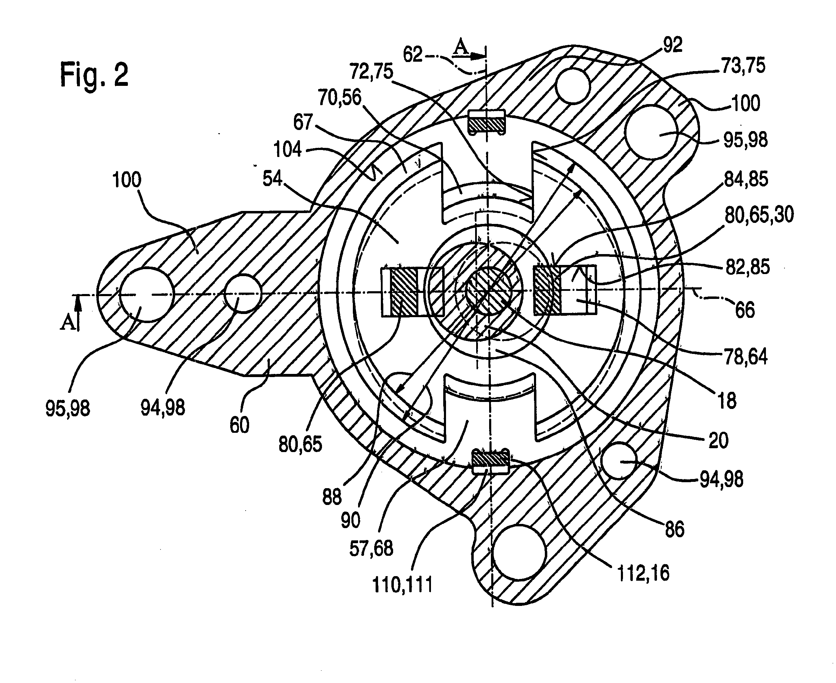

Im Ausführungsbeispiel, wie es im Schnitt der Figur 2 dargestellt ist, weist der Befestigungsflansch 60 als erste Gegenelemente 57 radiale Stege 68 auf, die in radiale Aussparungen 70 eingreifen, die die ersten Führungselemente 56 bilden. Dabei wird das Kopplungselement 54 über seitliche Führungsflächen 72 der ersten Führungselemente 56 entlang korrespondierenden seitlichen Gegenführungsflächen 73 des Befestigungsflansches 60 geführt. Die Führungs- und Gegenführungsflächen 72, 73 wirken hierbei gleichzeitig als Stützschultern 75, über die das Drehmoment zwischen dem Kopplungselement 54 und dem Befestigungsflansch 60 übertragen wird. Die zweiten Führungselemente 64 des Kopplungselements 54 sind als zweite radiale Aussparungen 78 ausgebildet, in die als zweite Gegenführungen 65 ausgebildete Führungsbolzen 80 greifen. Die radialen Aussparungen 78 weisen beide Führungsflächen 82 auf, an denen die Führungsbolzen 80 über Gegenführungsflächen 84 anliegen und das Exzenterrad 30 auf eine Bewegung relativ zum Kopplungselement 54 entlang der Geraden 66 zwingen. Die zweiten Führungs- bzw. Gegenführungsflächen 82, 84 sind ebenfalls als zweite Stützschultern 85 ausgebildet, über die das Drehmoment zwischen dem Exzenterrad 30 und dem Kopplungselement 54 übertragen wird. Das Kopplungselement 54 weist einen mittigen, beispielsweise kreisförmigen Durchbruch 86 auf, wobei das den Durchbruch 86 durchdringende Exzenterelement 20 innerhalb des Durchbruchs 86 um die Mittelachse 19 rotieren kann. Die äußere Form des Kopplungselements 54 ist hier in etwa kreisförmig ausgebildet, wobei dessen Außendurchmesser 88 geringer ist, als der Innendurchmesser 90, der in etwa kreisförmigen Ausnehmung 67 des Befestigungsflansches 60, um eine Verschiebung des Kopplungselements 54 entlang der Achse 62 zu ermöglichen. Die ersten Führungselemente 56 und die zweiten Führungselemente 64 des Kopplungselements 54 sind als radial nach außen bzw. radial nach innen zum Durchbruch 86 hin offene Aussparungen 70, 78 ausgebildet. Diese Aussparungen 70, 78 können in alternativen Ausführungen aber je nach Ausformung der Führungselemente 56, 64 und der Gegenelemente 57, 65 auch als geschlossene Langlöcher oder tangentiale parallele Führungsflächen ausgebildet sein .

Der Befestigungsflansch 60 umschließt das Kopplungselement 54 vollständig, das innerhalb der Ausnehmung 67 angeordnet ist. Das Kopplungselement 54 liegt dabei axial auf gleicher Höhe mit dem Befestigungsflansch 60 in einer Ebene senkrecht zum Lagerbolzen 18. In einem äußeren Randbereich 92 des Befestigungsflansches 60 sind Aufnahmen 94 für Verbindungselemente 99 - beispielsweise Schrauben oder Nieten - ausgeformt, mit denen der Deckel 16 und der Grundkörper 14 miteinander und/oder mit dem Befestigungsflansch 60 verbunden werden. Hierzu werden beispielsweise in entsprechenden Gegenaufnahmen 96 des Deckels 16 Schrauben 99 angeordnet, die die als Löcher ausgebildeten Aufnahmen 94 durchdringen und in den Grundkörper 14 eingeschraubt werden. Das Getriebegehäuse 12 ist somit fest verschlossen und der Befestigungsflansch 60 in das Getriebegehäuse 12 integriert. Dadurch liegt an jeder axialen Seite 59, 61 das Befestigungsflansches 60 eines der Gehäuseteile 14 oder 16 an. Der Befestigungsflansch 60 weist weiter radiale Fortsätze 100 auf, die das Getriebegehäuse überragen, und Aufnahmen 95 für Befestigungselemente 99 aufweisen, die den Befestigungsflansch 60 mit einem der zueinander beweglichen Teile 8, 9 verbindet. Die Aufnahmen 95 sind beispielsweise auch als runde Löcher 98 ausgebildet, die beispielsweise Schrauben 99 oder Nieten 99 aufnehmen. Um das Exzentergetriebe 10 gegenüber einem der zueinander beweglichen Teile 8,9 zu positionieren, sind an den Aufnahmen 95 Abstandshalter 102 angeordnet. Der Befestigungsflansch 60, der beispielsweise als Blechstanzteil-gefertigt ist, weist in seinem inneren Bereich einen Durchsatz 104 auf, wodurch einerseits eine radiale Innenfläche 106 und eine radiale Außenfläche 108 gebildet wird, Dadurch dient der Befestigungsflansch 60 als Zentrierelement für die Gehäuseteile 14 und 16, wobei sich der Deckel 16 mit einem äußeren Rand 107 an der radialen Innenwand 106, und der Grundkörper 14 mit einem Rezess 109 an der radialen Außenwand 108 abstützt. Zusätzlich zu dieser radialen Fixierung weist der Befestigungsflansch 60 als Sicherungselemente 110-gegen eine Verdrehung weitere Aussparungen 111 auf, in die formschlüssig Gegenelemente 112 des Deckels 16 greifen.

In einer erfindungsgemäßen Anwendung zur Sitzverstellung ist das Exzentergetriebe 10 über die Aufnahmen 95 des Befestigungsflansches 60 mit einem Sitzgestell 8,9 verbunden, wobei das Abtriebselement 40 über die Schnittstelle 42, 43, 44 mit einem gegenüber dem Sitzgestell beweglichen Teil 8, 9 - beispielsweise der Sitzlehne - witkverbunden ist. Wirken nun beim Auftreten eines Auffahrunfalls hohe Drehmomente auf das Abtriebselement 40, werden diese über das Exzenterrad 30 über die Stützschultern 85 auf das Kopplungselement 54, und von diesem über die Stützschultern 75 direkt auf den Befestigungsflansch 60 übertragen, und somit vom Sitzgestell aufgenommen. Dadurch erwährt der Elektromotor 28, sowie die erste Getriebestufe (Schnecke 24, Schneckenrad 22 und das Getriebegehäuse 12) keine erhöhten Kräfte.

In einem nicht näher dargestellten alternativen Ausführungsbeispiel ist das Kopplungselement 54 einstückig mit dem Exzenterrad 30 ausgebindet. Dabei weist das Kopplungselement 54 eine Außenverzahnung auf, die direkt in eine Innenverzahnung des Befestigungsflansches 60 greift. Das Exzenterrad 30 mit dem Kupplungselement 54 ist dabei frei drehbar angeordnet, wobei sich die Untersetzung aus dem Verhältnis der Zähnepaarung des Kopplungselements 54 mit dem Befestigungsflansch 60 zur Zahnpaarung der Innenverzahnung 36 / Außenverzahnung 32 ergibt. Auch hierbei werden die über das Abtriebselement 40 eingeleiteten hohen Crash-Momente über die Außenverzahnung des Kopplungselements 54 direkt auf die Innenverzahnung des Befestigungsflansches 40 und damit auf das Sitzgestell übertragen. Dabei kann die Außenverzahnung des Kopplungselements 54 durchgängig mit der Außenverzahnung 32 des Exzenterrads 30, oder als abgesetzte Verzahnung ausgebildet sein.

Es sei angemerkt, dass hinsichtlich der in den Figuren und der Beschreibung gezeigten Ausführungsbeispiele vielfältige Kombinationsmöglichkeiten der einzelnen Merkmale untereinander möglich sind. So kann beispielsweise die konkrete Ausgestaltung des Befestigungsflansches 60, des Kopplungselements 54 und des Exzenterrads 30 mit den ersten und zweiten Führungselementen 56, 64 mit den korrespondierenden Gegenelementen 57, 65 oder der Winkel zwischen den beiden Geraden 62 und 66 beliebig variiert werden. Wesentlich ist dabei nur, dass auf das Exzentergetriebe 10 einwirkende hohe Drehmomente direkt über einen Formschluss des Kopplungselements 54 mit dem Befestigungsflansch 60 über den belastungsfähig ausgebildeten Befestigungsflansch 60 abgeführt werden können. Dadurch können das Gehäuse 12 und die anderen Bauteile, die nicht im Kraftfluss liegen, aus kostengünstigeren, und getriebeoptimierten Werkstoffen, wie beispielsweise Kunststoff hergestellt werden. Die Anwendung des Exzentergetriebes 10 ist nicht auf das Verstellen von Sitzteilen im Kraftfahrzeug beschränkt, sondern kann bei beliebigen Verstellvorrichtungen eingesetzt werden, bei denen hohe Drehmomente aufgenommen werden sollen.

## Patentansprüche

1. Exzenter-Getriebe (10) zum Verstellen zweier relativ zueinander beweglich angeordneterer Teile (8, 9), mit einem Getriebegehäuse (12), einem von einem Drehantrieb (28) angetriebenen Exzenterelement (20), auf dem ein Exzenterrad (30) drehbar gelagert ist, und einem Abtriebselement (40), das durch abschnittsweises Ineinandergreifen mit dem Exzenterrad (30) zusammenwirkt, wobei das Exzenterrad (30) mit einem Kopplungselement (54) wirkverbunden ist, das innerhalb einer Ausnehmung (67) eines Befestigungsflansches (60) angeordnet ist, mit dem das Exzenter-Getriebe (10) an einem der beiden Teile (8, 9) fixierbar ist, wobei der Befestigungsflansch (60) radial über das Getriebegehäuse (12) ragende Bereiche (100) aufweist, in denen Aufnahmen (95) angeordnet sind für Verbindungselemente (99), die mit einem der beiden Teile (8, 9) zusammenwirken,
**dadurch gekennzeichnet, dass** das Getriebegehäuse (12) einen Grundkörper (14) aus Kunststoff und einen Deckel (16) aufweist, die jeweils an einer axialen Seite (59, 61) des Befestigungsflansches (60) befestigt sind.

2. Exzenter-Getriebe (10) nach Anspruch 1, **dadurch gekennzeichnet, dass** der Befestigungsflansch (60) Aufnahmen (94), insbesondere Löcher (98), für Verbindungselemente (99) aufweist, die mit dem Getriebegehäuse (12, 14, 16) zusammenwirken.

3. Exzenter-Getriebe (10) nach einem der Ansprüche 1 oder 2, **dadurch gekennzeichnet, dass** der Befestigungsflansch (60) aus Metall gefertigt ist

4. Exzenter-Getriebe (10) nach einem der vorhergehenden Ansprüche, **dadurch gekennzeichnet, dass** im Getriebegehäuse (12) ein Bolzen (18) angeordnet ist, auf dem drehbar ein Exzenterelement (20) gelagert ist, und das Exzenterelement (20) drehfest mit einem Schneckenrad (22) verbunden ist, das mit einer von dem Drehantrieb (28) angetriebenen Schnecke (24) kämmt

5. Exzenter-Getriebe (10) nach einem der vorhergehenden Ansprüche, **dadurch gekennzeichnet, dass** der Befestigungsflansch (60) mindestens eine zylindermantelförmige Fläche (106, 108) aufweist, an der der Grundkörper (14) und/oder der Deckel (16) radial anliegen.

6. Exzenter-Getriebe (10) nach einem der vorhergehenden Ansprüche, **dadurch**-**gekennzeichnet**, dass das Kopplungselement (54) Führungselemente (56, 64) aufweist, die mit entsprechenden Gegenelementen (57, 65) zusammenwirken, um das Exzenterrad (30) auf eine überlagerte Bewegung entlang zweier in etwa senkrecht zueinander angeordneter Geraden (62, 66) zu zwingen, und das Exzenterrad (30) an einer Eigenrotation zu hindern.

7. Exzenter-Getriebe (10) nach einem der vorhergehenden Ansprüche, **dadurch gekennzeichnet, dass** der Befestigungsflansch (60) radiale Stege (57, 68) aufweist, die in erste radiale Aussparungen (56, 70) des Kopplungselements (54) greifen, um die Bewegung des Kopplungselement (54) gegenüber dem Befestigungsflansch (60) entlang der ersten Geraden (62) zu führen.

8. Exzenter-Getriebe (10) nach einem der vorhergehenden Ansprüche, **dadurch gekennzeichnet, dass** das Exzenterrad (30) axiale Führungsbolzen (65, 80) aufweist, die in zweite radiale Aussparungen (64, 78) des Kopplungungselements (54) greifen, um die Bewegung des Exzenterrads (30) gegenüber dem Kopplungselement (54) entlang der zweiten Geraden (66) zu führen.

9. Exzenter-Getriebe (10) nach einem der vorhergehenden Ansprüche, **dadurch**-**gekennzeichnet**, dass beim Einwirken eines Drehmoments über das Abtriebselement (40) auf das Kopplungselement (54), sich dieses über Stützschultern (75) - insbesondere der radialen Stege (68) - direkt am Befestigungsflansch (60) abstützt.

10. Exzenter-Getriebe (10) nach einem der vorhergehenden Ansprüche, **dadurch**-**gekennzeichnet**, dass das Exzenterrad (30) als Stirnzahnrad (34) mit einer Außenverzahnung (32) ausgebildet ist, die in eine Innenverzahnung (36) des als Hohlzahnrad (38) ausgebildeten Abtriebselements (40) greift.

11. Exzenter-Getriebe (10) nach einem der vorhergehenden Ansprüche, **dadurch gekennzeichnet, dass** das Exzenterelement (20) auf einem drehbar im Getriebegehäuse (12) gelagerten Lagerbolzen (18) befestigt ist und insbesondere über ein Schnerkengetriebe (22, 24) von einem Elektromotor (28) angetrieben wird.

12. Exzenter-Getriebe (10) nach einem der vorhergehenden Ansprüche, **dadurch gekennzeichnet, dass** das Abtriebselement (40) im Deckel (16) des Getriebegehäuses (12) gelagert ist, und mittels einer formschlüssigen Schnittstelle (42, 43, 44) insbesondere ein Sitzteil (8, 9) im Kraftfahrzeug verstellt.

## Claims

1. Eccentric gearing (10) for adjusting two parts (8, 9) which are arranged so as to be movable relative to one another, having a gearing housing (12), having an eccentric element (20) which is driven by a rotary drive (28) and on which is rotatably mounted an eccentric wheel (30), and having a drive output element (40) which interacts with the eccentric wheel (30) by meshing therewith in sections, with the eccentric wheel (30) being operatively connected to a coupling element (54) which is arranged within a recess (67) of a fastening flange (60) by means of which the eccentric gearing (10) can be fixed to one of the two parts (8, 9), with the fastening flange (60) having regions (100) which project radially beyond the gearing housing (12) and in which are arranged receptacles (95) for connecting elements (99) which interact with one of the two parts (8, 9), **characterized in that** the gearing housing (12) has a plastic basic body (14) and a cover (16) which are fastened in each case to one axial side (59, 61) of the fastening flange (60).

2. Eccentric gearing (10) according to Claim 1, **characterized in that** the fastening flange (60) has receptacles (94), in particular holes (98), for connecting elements (99) which interact with the gearing housing (12, 14, 16).

3. Eccentric gearing (10) according to either of Claims 1 and 2, **characterized in that** the fastening flange (60) is produced from metal.

4. Eccentric gearing (10) according to one of the preceding claims, **characterized in that** a journal (18) is arranged in the gearing housing (12), on which journal (18) is rotatably mounted an eccentric element (20), and the eccentric element (20) is connected to a worm wheel (22) for conjoint rotation therewith, which worm wheel (22) meshes with a worm (24) which is driven by the rotary drive (28).

5. Eccentric gearing (10) according to one of the preceding claims, **characterized in that** the fastening flange (60) has at least one cylinder-jacket-shaped surface (106, 108) against which the basic body (14) and/or the cover (16) bear radially.

6. Eccentric gearing (10) according to one of the preceding claims, **characterized in that** the coupling element (54) has guide elements (56, 64) which interact with corresponding counterpart elements (57, 65) in order to force the eccentric wheel (30) to perform a superposed movement along two approximately mutually perpendicular straight lines (62, 66), and to prevent the eccentric wheel (30) from rotating about its own axis.

7. Eccentric gearing (10) according to one of the preceding claims, **characterized in that** the fastening flange (60) has radial webs (57, 68) which engage into first radial cutouts (56, 70) of the coupling element (54) in order to control the movement of the coupling element (54) with respect to the fastening flange (60) along the first straight line (62).

8. Eccentric gearing (10) according to one of the preceding claims, **characterized in that** the eccentric wheel (30) has axial guide pins (65, 80) which engage into second radial cutouts (64, 78) of the coupling element (54) in order to control the movement of the eccentric wheel (30) with respect to the coupling element (54) along the second straight line (66).

9. Eccentric gearing (10) according to one of the preceding claims, **characterized in that**, in the event of a torque acting via the drive output element (40) on the coupling element (54), the latter is supported directly on the fastening flange (60) via support shoulders (75) - in particular of the radial webs (68).

10. Eccentric gearing (10) according to one of the preceding claims, **characterized in that** the eccentric wheel (30) is designed as a spur gearwheel (34) with an external toothing (32) which engages into an internal toothing (36) of the drive output element (40) designed as an internal gearwheel (38).

11. Eccentric gearing (10) according to one of the preceding claims, **characterized in that** the eccentric element (20) is fastened to a bearing journal (18) rotatably mounted in the gearing housing (12), and said eccentric element (20) is in particular driven by an electric motor (28) via a worm gear mechanism (22, 24).

12. Eccentric gearing (10) according to one of the preceding claims, **characterized in that** the drive output element (40) is mounted in the cover (16) of the gearing housing (12) and, by means of a positively locking interface (42, 43, 44), adjusts in particular a seat part (8, 9) in the motor vehicle.

## Revendications

1. Transmission à excentrique (10) pour le réglage de deux pièces (8, 9) disposées de manière mobile l'une par rapport à l'autre, comprenant un boîtier de transmission (12), un élément d'excentrique (20) entraîné par un entraînement en rotation (28), sur lequel est montée à rotation une roue d'excentrique (30), et un élément de sortie (40), qui coopère avec la roue d'excentrique (30) par engagement partiel l'un dans l'autre, la roue d'excentrique (30) étant connectée fonctionnellement à un élément d'accouplement (54) qui est disposé à l'intérieur d'un évidement (67) d'une bride de fixation (60) avec laquelle la transmission à excentrique (10) peut être fixée sur l'une des deux pièces (8, 9), la bride de fixation (60) présentant des régions (100) saillant radialement au-delà du boîtier de transmission (12), dans lesquelles sont disposés des logements (95) pour des éléments de connexion (99) qui coopèrent avec l'une des deux pièces (8, 9),
**caractérisée en ce que** le boîtier de transmission (12) présente un corps de base (14) en plastique et un couvercle (16), qui sont fixés à chaque fois sur un côté axial (59, 61) de la bride de fixation (60).

2. Transmission à excentrique (10) selon la revendication 1, **caractérisée en ce que** la bride de fixation (60) présente des logements (94), en particulier des trous (98) pour des éléments de connexion (99), qui coopèrent avec le boîtier de transmission (12, 14, 16).

3. Transmission à excentrique (10) selon l'une quelconque des revendications 1 ou 2, **caractérisée en ce que** la bride de fixation (60) est fabriquée en métal.

4. Transmission à excentrique (10) selon l'une quelconque des revendications précédentes, **caractérisée en ce qu'**un boulon (18) est disposé dans le boîtier de transmission (12) sur lequel est monté à rotation un élément d'excentrique (20), et l'élément d'excentrique (20) est connecté de manière solidaire en rotation à une roue à denture hélicoïdale (22), qui s'engrène avec une vis sans fin (24) entraînée par l'entraînement en rotation (28).

5. Transmission à excentrique (10) selon l'une quelconque des revendications précédentes, **caractérisée en ce que** la bride de fixation (60) présente au moins une surface en forme d'enveloppe cylindrique (106, 108), sur laquelle s'appliquent radialement le corps de base (14) et/ou le couvercle (16).

6. Transmission à excentrique (10) selon l'une quelconque des revendications précédentes, **caractérisée en ce que** l'élément d'accouplement (54) présente des éléments de guidage (56, 64), qui coopèrent avec des éléments conjugués correspondants (57, 65), afin de forcer la roue d'excentrique (30) en un mouvement superposé le long de deux droites (62, 66) disposées approximativement perpendiculairement l'une à l'autre, et d'empêcher la roue d'excentrique (30) de tourner sur elle même.

7. Transmission à excentrique (10) selon l'une quelconque des revendications précédentes, **caractérisée en ce que** la bride de fixation (60) présente des nervures radiales (57, 68) qui viennent en prise dans des premiers évidements radiaux (56, 70) de l'élément d'accouplement (54), afin de guider le mouvement de l'élément d'accouplement (54) par rapport à la bride de fixation (60) le long de la première droite (62).

8. Transmission à excentrique (10) selon l'une quelconque des revendications précédentes, **caractérisée en ce que** la roue d'excentrique (30) présente des boulons de guidage axiaux (65, 80) qui viennent en prise dans des deuxièmes évidements radiaux (64, 78) de l'élément d'accouplement (54), afin de guider le mouvement de la roue d'excentrique (30) par rapport à l'élément d'accouplement (54) le long de la deuxième droite (66).

9. Transmission à excentrique (10) selon l'une quelconque des revendications précédentes, **caractérisée en ce que** lors de l'action d'un couple par le biais de l'élément de sortie (40) sur l'élément d'accouplement (54), celui-ci s'appuie directement contre la bride de fixation (60) par le biais d'épaulements de support (75), notamment des nervures radiales (68).

10. Transmission à excentrique (10) selon l'une quelconque des revendications précédentes, **caractérisée en ce que** la roue d'excentrique (30) est réalisée sous forme de pignon droit (34) avec une denture extérieure (32), qui vient en prise dans une denture intérieure (36) de l'élément de sortie (40) réalisé sous forme de couronne dentée (38).

11. Transmission à excentrique (10) selon l'une quelconque des revendications précédentes, **caractérisée en ce que** l'élément d'excentrique (20) est fixé sur un boulon de palier (18) monté à rotation dans le boîtier de transmission (12) et est entraîné notamment par le biais d'un entraînement à vis sans fin (22, 24) par un moteur électrique (28).

12. Transmission à excentrique (10) selon l'une quelconque des revendications précédentes, **caractérisée en ce que** l'élément de sortie (40) est monté dans le couvercle (16) du boîtier de transmission (12), et déplace, au moyen d'une interface par engagement par coopération de forme (42, 43, 44), notamment une partie de siège (8, 9) dans le véhicule automobile.
